(19) Europäisches Patentamt / European Patent Office / Office européen des brevets

(11) **EP 2 234 355 B1**

(12) **EUROPEAN PATENT SPECIFICATION**

(45) Date of publication and mention
of the grant of the patent:
**31.10.2012 Bulletin 2012/44**

(51) Int Cl.:
*H04L 25/02* (2006.01)     *H04B 7/06* (2006.01)

(21) Application number: **09156126.6**

(22) Date of filing: **25.03.2009**

(54) **MIMO Transmission in IEEE802.11 WLAN Systems**

MIMO-Übertragung in IEEE802.11-WLAN-Systemen

Transmission MIMO dans des systèmes WLAN IEEE802.11

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(43) Date of publication of application:
**29.09.2010 Bulletin 2010/39**

(73) Proprietors:
• **IHP GmbH-Innovations for High Performance
Microelectronics / Leibniz-Institut für innovative
Mikroelektronik
15236 Frankfurt / Oder (DE)**
• **Universidad De Cantabria
39005 Santander (ES)**

(72) Inventors:
• **Kraemer, Rolf
15517 Fürstenwalde (DE)**
• **Krstic, Milos
15230 Frankfurt (Oder) (DE)**
• **Stamenkovic, Zoran
12355 Berlin (DE)**
• **Tittelbach-helmrich, Klaus
15234 Frankfurt (oder) (DE)**
• **Santamaria, Ignacio
39120 Mortera, Cantabria (ES)**
• **Via, Javier
39715 Entrambasagüas Cantabria (ES)**
• **Perez, Jesus
39140 Somo, Cantabria (ES)**
• **Ibanez, Jesus
39609 Escobedo de Camargo (ES)**

(74) Representative: **Eisenführ, Speiser & Partner
Anna-Louisa-Karsch-Strasse 2
10178 Berlin (DE)**

(56) References cited:
**EP-A- 1 715 643      EP-A- 1 838 011
WO-A-2008/003087      US-A1- 2007 053 416
US-A1- 2008 084 951**

**Description**

The IEEE 802.11 standard family specifies the implementation of a wireless local area network (WLAN), a wireless equivalent to the wired Ethernet standard. The 802.11 standards define the physical layer and data link layer, in particular the logical link control (LLC) and the media access control (MAC), according to the ISO/OSI reference model. Wireless local area networks (WLANs) can be implemented according to IEEE802.11 WLAN standards IEEE802.11a, b, or g. A transmitter, receiver or transceiver compliant with at least one of the mentioned IEEE 802.11 WLAN standards a, b, or g will in the following be referred to as a IEEE 802.11 transmitter, IEEE 802.11 receiver or IEEE 802.11 transceiver. However, to increase readability, an IEEE 802.11 transmitter, receiver, or transceiver will in the following also be referred to in short as a transmitter, receiver, or transceiver.

One of the main requirements for future evolutions of WLAN systems is increased cell capacity, and this will require enhanced multiple-input-multiple-output (MIMO) schemes with improved diversity and coding gains in comparison with those in existing systems. For enhancing the capacity of wireless radios, multi-antenna systems are used at the transmitter and the receiver, respectively. Some commercially available IEEE802.11a boards already have two antennas, but they only provide a basic switching function between antennas, i.e., antenna selection.

Known full MIMO transmission schemes provide improved transmission reliability and radio coverage, but require a strongly increased hardware effort for the baseband processing. For multiple spatial and temporal processing branches must be provided in the digital baseband part, the number of branches corresponding to the number of antennas. Consequently, chip area and cost are rather high for such systems.

EP 1 838 011 discloses a method for communication between a transmitter and a receiver, which can use MIMO or SISO transmission. Information about the communication path and desired performance parameters is determined. Based on this information, either SISO or MIMO transmission is selected, and information about the selected mode of transmission is exchanged between the two devices. Afterwards, communication is performed in accordance with the selected mode. If MIMO transmission is selected, it is performed using either a per-carrier space-time block coded (STBC) scheme, or a space-division multiplexing scheme (SDM-RX).

It would be desirable to further improve the transmission reliability of an IEEE802.11 WLAN communication system with low additional hardware effort and backwards compatibility to the respective existing IEEE 802.11 standard employed.

It is therefore an object of the present invention to provide a method for operating an IEEE802.11 receiver, which allows a data communication with higher transmission reliability than the IEEE802.11 WLAN standards provide, without, however, loosing the compatibility with a respective one of these well-established standards. The object of the present invention translates also to a method for operating an IEEE802.11 transmitter, and to IEEE802.11 receiver, transmitter and transceiver devices.

According to a first aspect of the present invention a method for operating an IEEE802.11 receiver is provided. The method comprises

- detecting whether a multiple-input-multiple-output transmission, hereinafter MIMO transmission, is possible, in RF communication with an IEEE802.11 transmitter, in other words, supported by the IEEE802.11 transmitter, wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;

    a) if yes, i.e., if a MIMO transmissions is enabled by both, IEEE802.11 transmitter and IEEE802.11 receiver:

    - operating the IEEE802.11 receiver with a plurality of antennas in communication with the IEEE802.11 transmitter;
    - performing a channel estimation process in communication with the IEEE802.11 transmitter,
    - determining a set of weights to be applied to the analogue RF signals received in different ones of the concurrent transmissions of the MIMO transmission;
    - receiving the MIMO transmission via the plurality of antennas;
    - subsequently combining the plurality of analogue RF signals according to a combining algorithm using the determined set of weights, thus forming a combined analogue RF signal;
    - subsequently converting the combined analogue RF signal into a combined digital baseband signal;
    - subsequently further processing the combined digital baseband signal;

    b) if no, i.e., if one of the IEEE802.11 transmitter and the IEEE802.11 receiver does not support a MIMO transmission:

- operating the IEEE802.11 receiver with a single antenna in communication with the IEEE802.11 transmitter;
- receiving and processing the stream of analogue radio frequency, RF, signals, in the form of a single-input-single-output transmission according to the IEEE802.11 standard, hereinafter SISO transmission, via the single antenna.

The method of the first aspect of the present invention allows an IEEE802.11 receiver to operate on two alternative physical layers. The first of the two alternative physical layers is the conventional IEEE802.11 physical layer according to a respective specific standard, which is well known in the art and provides communication between a transmitter and a receiver via a SISO OFDM transmission. A second, alternative physical layer that, among other advantages, enables a higher reliability than the conventional IEEE802.11 physical layer, is provided by operating the IEEE802.11 receiver to process a specific type of MIMO transmissions, which as such are foreign to the IEEE802.11 WLAN standards. A MIMO transmission according to the present invention has multiple concurrent transmissions of a single stream of analogue RF data signals, wherein corresponding analogue RF data signals of different ones of the concurrent transmissions of the stream differ only by having different amplitudes or different phases, or both, different amplitudes and phases.

MIMO wireless communication employing spatial multiplexing usually is based on transmitting independent and separately encoded RF data signals, thus multiple streams, one from each of the multiple transmit antennas. The transmitted data signals are separately encoded in conventional MIMO systems. In contrast, a single stream is used for the MIMO transmission according to the present invention. The signals only differ in the applied weights in the analogue domain. That means, the signals transmitted by the different antennas differ only in their amplitudes and phases.

It turns out that single-stream MIMO transmissions are particularly suited to the front end reception and combining in the analogue RF domain, which is performed according to the method of the first aspect of the invention. By shifting the spatial processing to the analogue RF domain, the number of receiving and transmitting baseband digital processing paths can be reduced to a single one. Known MIMO-OFDM receivers, in contrast, perform all the spatial processing in the baseband domain and require a corresponding number of processing modules in the digital baseband part. The invention thus allows reducing the hardware overhead introduced by enabling MIMO transmissions to additional antennas and a modified RF front end. This translates into lower fabrication costs and a reduced power consumption of the receiver. Furthermore, it reduces the number of parameters to be adjusted on the transmitter and receiver side, thus simplifying the baseband design and making the receiver more robust to uncertainties, such as those due to the channel estimation procedure.

Part of the process of the invention is a channel estimation process, which an IEEE802.11 receiver performs, typically in the digital baseband part, in communication with the IEEE802.11 transmitter. After the channel estimation process for the MIMO transmissions, a set of weights, i.e., a set of weight factors is determined. The weights are applied to the analogue RF signals received in different ones of the concurrent transmissions of the MIMO transmission. This allows an adaptive beamforming at the receiver as well as at the transmitter.

A second aspect of the present invention is formed by a method for operating an IEEE802.11 transmitter. The method comprises:

- detecting whether a multiple-input-multiple-output transmission, hereinafter MIMO transmission, is possible in RF communication with a target IEEE802.11 receiver;
  wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;

  a) if yes:

  - operating the IEEE802.11 transmitter with a plurality of antennas in communication with the target IEEE802.11 receiver;

  - performing a channel estimation process in communication with the target IEEE802.11 receiver of the MIMO transmission;

  - determining a set of weights to be applied to the analogue RF signals to be transmitted in different ones of the concurrent transmissions of the MIMO transmission;

  - transmitting the MIMO transmission via the plurality of antennas to the target IEEE802.11 receiver;

  b) if no:

- operating the IEEE802.11 transmitter with a single antenna in communication with the target IEEE802.11 receiver;

- transmitting the stream of analogue RF signals as a single-input-single-output transmission according to the IEEE802.11 standard, hereinafter SISO transmission, via at least one of the plurality of antennas.

The advantages of the method of the second aspect of the invention for operating an IEEE802.11 transmitter correspond to those described for the method of the first aspect of the invention.

It should be noted that the methods of the first and second aspect concern a communication between one transmitter and one receiver. However, the invention does not exclude that a transmitter may have different parallel communications with different receivers, just as a receiver may perform communications with different transmitters. Multiple parallel transmissions may be realized employing identical or different transmission schemes, MIMO according to the invention or standard SISO, for transmission links to different devices.

In the following, embodiments of the methods of the first and second aspects of the invention will be described. The additional features of different embodiments can be combined to form further embodiments, unless such different embodiments are expressly described as forming alternatives to each other. For ease of description and reading, the method of the first aspect of the invention for operating an IEEE802.11 receiver will in the following be referred to as the receiver method, and the method of the second aspect of the invention for operating an IEEE802.11 transmitter will in the following be referred to as the transmitter method.

In an embodiment of the receiver method, performing the beamforming process, i.e., determining the set of weights comprises

- receiving a first frame from the transmitter in a first MIMO transmission, which employs a first subset of weights for the transmitter side, and updating only a second subset of weights for the receiver side, i.e., keeping the first subset of weights fixed;
- transmitting a second frame from the receiver to the transmitter in a second MIMO transmission using the updated second subset of weights; and
- repeating these foregoing steps until the first and second subsets of weights for the transmitter and receiver side achieve a predetermined convergence criterion.

The corresponding embodiment of the transmitter method comprises

- transmitting the first frame from the IEEE802.11 transmitter to the target IEEE802.11 receiver in the first MIMO transmission using the first subset of weights for the transmitter side;
- receiving the second frame from the target IEEE802.11 receiver in a second MIMO transmission and updating only the first subset of weights for the transmitter side;
- repeating these foregoing steps until the first and second subsets of weights for the transmitter and receiver side achieve a predetermined convergence criterion.

These embodiments have the advantage of a reduced processing amount required on the side of the transmitter for performing the channel estimation.

The channel estimation process and the process of weight calculation are different tasks. In a hardware implementation, they can form different sub-tasks of a common block or be implemented as separate circuit blocks.

The channel estimation procedure preferably uses a time-division duplex (TDD) operation mode. It is based on the assumption that the transmission channel observed between any pair of antennas is the same regardless of the direction of the link. In a preferred embodiment, the channel estimation on the receiver side is performed using a least-squares (LS) estimate.

Preferably, transmitting the first channel estimation frame comprises transmitting a plurality of OFDM training symbols. Different OFDM training symbols may be transmitted employing different sets of weights. This allows the receiver to subsequently perform a selection of an optimal set of weights according to a predetermined selection criterion.

In a preferred embodiment of the transmitter and receiver methods of the invention, a common pair of subsets of weights, which are also referred to as Tx-Rx beamformers, is applied to all data carriers used. This embodiment requires a solution to the challenging problem of selecting an optimal pair of beamformers for a specific channel realization..

In one embodiment, the optimal set of weights is ascertained by employing a gradient search algorithm.

Once the channel has been estimated, the optimal weights, i.e., amplitudes and phases for each transmitted signal, are preferably selected to optimize a predetermined performance criterion. Selecting the optimal set of weights preferably comprises selecting that particular set of weights, for which a predetermined cost function is minimized. In particular, the system performance depends on a virtual SISO channel, which is the result of a combination of the selected weights and the true MIMO channel. A virtual or equivalent SISO channel is a hypothetical SISO transmission channel that has the transmission properties of a MIMO transmission channel under consideration, which MIMO channel has fixed set weights on the transmitter and receiver sides.

In one embodiment the following cost function is used:

$$\frac{1}{\alpha-1}\log\left[\sum_{k=1}^{N_c}\frac{1}{N_c}\left(\frac{1}{1+\gamma|h_k|^2}\right)^{\alpha-1}\right],$$

wherein

- $h_k = w_R^H H_k w_T$  represents the response of the virtual/equivalent SISO channel for the k-th active subcarrier;

- $N_c$ is the number of active subcarriers. In IEEE802.11a $N_c = 52$;

- $H_k$ is the (estimated) MIMO channel for the k-th subcarrier. Each element in the matrix $H_k$ represents the channel between one transmit and one receive antenna;

- $w_T$ and $w_R$ are the transmit and receive beamformers. Each element in these vectors is a complex weight representing the amplitude and phase to be applied by the RF-control unit;

- $\gamma$ is the signal to noise ration defined as the relation between the transmitted power and the noise power at the receiver;

- $\alpha$ is a selectable fixed parameter which permits to select one of different performance criteria to be optimized by the selected set of weights..

In particular:

- $\alpha = 0$ translates into the optimization of the overall SNR. Equivalently, it reduces to the maximization of the energy of the equivalent SISO channel.

- $\alpha = 1$ provides the criterion consisting of the maximization of the system capacity.
  This can be proved by applying L'Hopital's rule to the general cost function.

- $\alpha = 2$ provides the criterion of minimizing the bit error rate under the assumption of linear receivers and optimal linear precoding.

- Other $\alpha$ values provide a tradeoff between the energy and the spectral flatness of the equivalent SISO channel. For larger $\alpha$ , part of the channel energy is sacrificed in order to obtain more frequency-flat equivalent channels.

In a further embodiment, the detection of the capability of handling MIMO transmissions is based on setting (on the respective transmitter side) and detecting (on the respective receiver side) a bit at a predefined bit position of a predefined field of a frame transmitted by the IEEE802.11 transmitter, which assumes a predefined value indicative of the capability of a MIMO transmission. Preferably, additional information about the system is included in the frame. In particular, the number of receive/transmit antennas and a number of training symbols to follow may be comprised by the frame. The receiver indicates its capability preferably by transmitting a corresponding frame to the IEEE802.11 transmitter. The mentioned information can be added to frames, which are otherwise in full accordance with the IEEE802.11 standard, thus supporting a backwards compatibility of the methods of the invention. For instance, the bit indicative of MIMO transmission capability may be the known reserved bit or the known parity bit of the conventional IEEE802.11 Signal Field of a frame transmitted during channel estimation.

Further aspects of the invention are formed by an IEEE802.11 receiver, which is configured to perform the method of the first aspect of the invention or one of its embodiments disclosed herein.

One embodiment of such an IEEE802.11 receiver comprises:

- a MIMO detecting unit, which is configured to detect whether a multiple-input-multiple-output transmission, hereinafter MIMO transmission, is possible in RF communication with an IEEE802.11 transmitter, wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;
- a channel estimation unit, which is connectable with a plurality of antennas and which is configured to perform, if a MIMO transmission is possible with the IEEE802.11 transmitter, a channel estimation process in communication with the IEEE802.11 transmitter,
- a beamforming unit, which is configured to determine a set of weights to be applied to the analogue RF signals received in different ones of the concurrent transmissions of the MIMO transmission;
- an RF frontend unit, which is connectable with the channel estimation unit, the beamforming unit, and with a plurality of antennas and which is configured to
- receive the MIMO transmission via the plurality of antennas;
- subsequently combine the plurality of analogue baseband signals according to a combining algorithm using the determined set of weights, thus forming a combined analogue RF signal;
- subsequently convert the combined analogue RF signal into a combined analogue digital baseband signal;
- a baseband unit, which is connected with the RF frontend and which is configured to further process the combined digital baseband signal;

wherein the RF frontend unit and the baseband unit are further configured to, if a MIMO transmission is not possible with the IEEE802.11 transmitter, receive and process the stream of analogue radio frequency, RF, signals, in the form of a single-input-single-output transmission according to the IEEE802.11 standard, hereinafter SISO transmission, via at least one of the plurality of antennas.

A fourth aspect of the present invention is formed by an IEEE802.11 transmitter, which is configured to perform a method according to the second aspect of the inventions or one of its embodiments disclosed herein. One embodiment of the IEEE802.11 transmitter comprises:

- a MIMO detecting unit, which is configured to detect whether a multiple-input-multiple-output transmission, hereinafter MIMO transmission, is possible in RF communication with a target IEEE802.11 receiver, wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;

- a channel estimation unit, which is connectable with a plurality of antennas and which is configured to perform, if a MIMO transmission is possible with the target IEEE802.11 receiver, a channel estimation process in communication with the target IEEE802.11 receiver;

- a beamforming unit, which is configured to determine a set of weights to be applied to the analogue RF signals to be transmitted in different ones of the concurrent transmissions of the MIMO transmission;

- an RF frontend unit, which is connectable with the channel estimation unit and with a plurality of antennas and which is configured to, if a MIMO transmission is possible with the target IEEE802.11 receiver, transmit the MIMO transmission via the plurality of antennas and, if a MIMO transmission is not possible with the target IEEE802.11 receiver, transmit the stream of analogue RF signals as a single-input-single-output transmission according to the IEEE802.11 standard, hereinafter SISO transmission, via at least one of the plurality of antennas.

A fifth aspect is formed by an IEEE802.11 transceiver, which comprises an IEEE802.11 receiver according to the third aspect of the invention and an IEEE802.11 transmitter according to the fourth aspect of the invention.

The methods and devices disclosed herein may be used in the context of any of the IEEE802.11 WLAN standards mentioned in the beginning of this specification.

Further embodiments are defined by the dependent claims at the end of the present specification.

In the following, further embodiments will be described with reference to the enclosed drawings. In the drawings:

Fig. 1 shows a schematic representation of a protocol stack implemented in an IEEE802.11a transmitter, receiver or transceiver;

Fig. 2 shows a schematic representation of protocol stacks on the physical layer and the data link layer for a communication between an IEEE802.11a transceiver capable of MIMO transmissions and IEEE802.11a device, which is not capable of MIMO transmissions;

Fig. 3 is a simplified block diagram of an IEEE802.11a transceiver capable of MIMO transmissions according to one embodiment of the invention;

Fig. 4 is a schematic representation of a frame structure that can be used in the context of MIMO transmissions;

Fig. 5 shows a schematic representation of a section of the frame of Fig. 4 with bit assignments in the MIMAX Signal Field;

Fig. 6 is a schematic flow diagram of a channel estimation process in the communication between two IEEE802.11a transceivers capable of MIMO transmissions;

Fig. 7 is a simplified flow diagram of a channel estimation process performed at the receiving end; and

Fig. 8 is a simplified block diagram of an IEEE802.11 transceiver.

In the following, the description of further embodiments will focus on the context of the IEEE802.11a standard. However, it should be understood that this is purely exemplary, and should not be understood as implying that the invention is not applicable in the context of other IEEE802.11 standards.

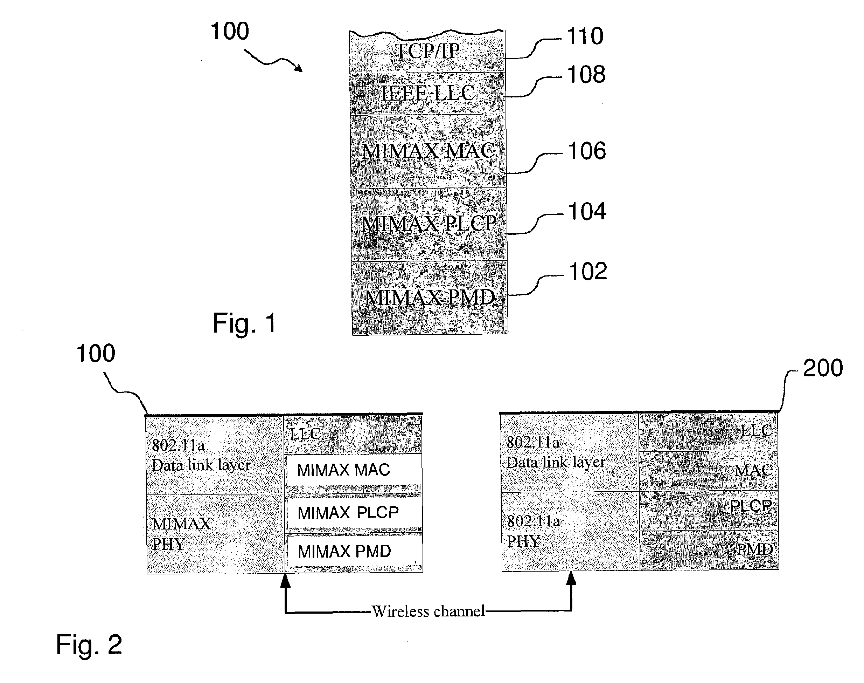

Reference is made in parallel to Figs. 1 and 2. Fig. 1 shows a schematic representation of a protocol stack implemented in an IEEE802.11a device 100, i.e., a transmitter, receiver, or transceiver. Fig 2 shows the corresponding protocol stacks of two IEEE802.11a devices 100 and 200, wherein the device 200 is a conventional device according to the prior art.

In the following, an IEEE802.11a device according to the present invention, whether a receiver, transmitter or transceiver will also be referred to as a MIMAX device.

Fig. 1 only shows a section of a protocol stack that covers the physical layer, the data link layer and the network and transport layer, also known as layers 1 to 4 according the well known OSI reference model representing a layered communication architecture. Fig. 1 serves particularly to indicate those sections of the protocol stack of the MIMAX device 100, which comprise modifications in comparison with a device that supports the conventional IEEE802.11a standard only, such as MIMAX device 200 in Fig. 2.

The physical layer has two sub-layers 102 and 104. On a physical-medium-dependent (PMD) sub-layer, which is shown by reference label 102, the communication between two MIMAX devices is modified in comparison with conventional IEEE802.11a devices by the introduction of MIMO capabilities and a signal combining in an analogue front end on the transmitting and receiving sides.

Note that the introduction of MIMO capabilities in done in the form of an option. The conventional physical layer that uses an OFDM based SISO air interface on the physical layer in the 5 GHz band forms another option implemented in the MIMAX PMD 102. The provision of the two options on the physical layer 102 requires adaptations in the Physical Layer Convergence Protocol PLCP, which forms an upper sub-layer 104 of the physical layer. For a MIMAX device, therefore, a modified MIMAX PLCP layer 104 is provided. The PLCP enables the presence of different physical-layer procedures, as used by a MIMAX device.

On top of the physical layer a data link layer comprising two sub-layers 106 and 108 is provided. The lower sub-layer 106 is a MIMAX MAC layer, which also comprises modifications in comparison with a conventional IEEE802.11a device, and which will be described further below in more detail. In contrast, the upper sub-layer 108 of the data link layer, which is formed by the link-level control layer, is compliant with the conventional IEEE802.11a standard and not modified in a MIMAX device 100.

On top of the data link layer, the network and transport layers 110 are summarized. In the present embodiment they are formed by a standard TCP/IP stack for both the MIMAX device 100 and the conventional IEEE802.11a device 200.

Fig 2 arranges corresponding protocol layers of the two devices 100 and 200 side by side. Communication between the two devices 100 and 200 is enabled by a backwards compatibility provided in the layers 102 to 106, which will be explained in more detail below.

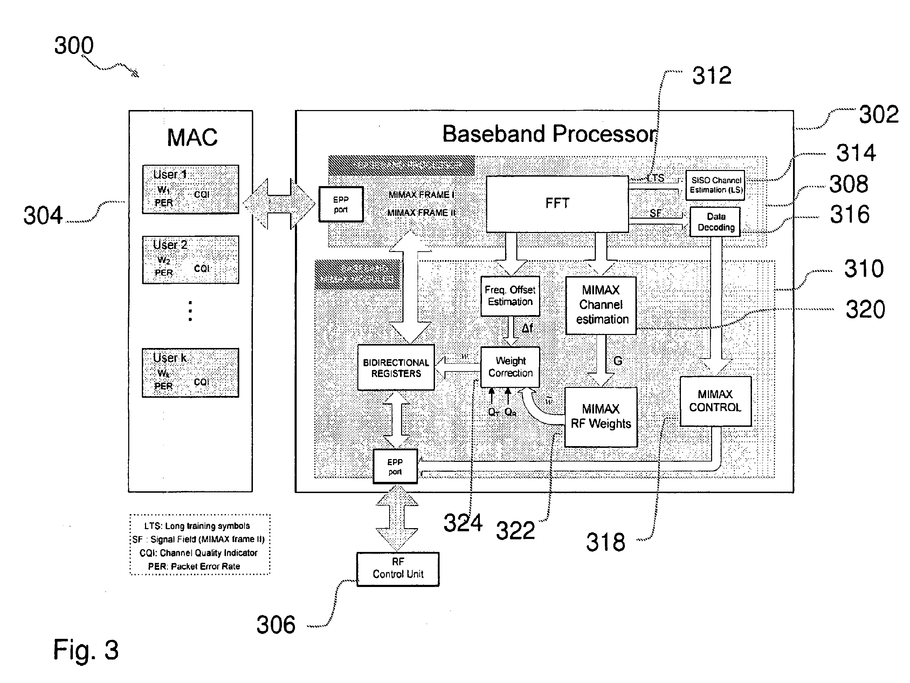

Fig. 3 is a simplified block diagram of an IEEE802.11a transceiver 300 capable of MIMO transmissions according to one embodiment of the invention. The transceiver 300 thus is an example of a MIMAX device. Only a baseband processor 302 and a MAC unit 304 are shown with some detail. An RF control unit 306 is only represented as a block.

The baseband processor 302 is connected with the RF control unit 306. The baseband processor is divided into two sections 308 and 310. The first section 308 implements known functionalities of an IEEE802.11a device, such as Fast Fourier Transform (FFT) in an FFT block 312, SISO channel estimation using long training symbols (LTS) in a SISO-channel estimation block 314, and data decoding in a data-decoding block 316 on the receiver side of the baseband processor.

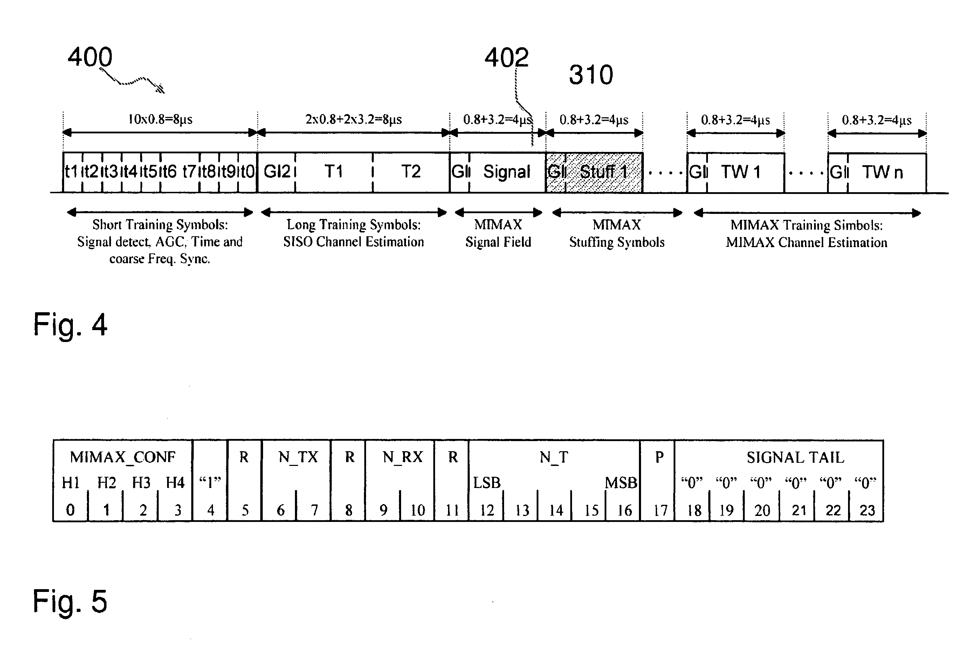

In addition, and as a difference to a conventional IEEE802.11a device, the data-decoding block 316 serves for detecting MIMO capabilities in an incoming frame. This is achieved by evaluating predefined bit in a Signal Field of a MIMAX frame, which indicates whether the other end of the communication is a MIMAX device as well, cf. also Fig. 4 and the pertaining description.

The second section 310 of the baseband processor is added in comparison with conventional IEEE802.11a devices. It comprises a MIMAX control unit 318, which activates or deactivates the MIMAX operation, i.e. the processing of a MIMO transmission according to the present invention, if the data decoding unit 316 indicates that the corresponding bit in the Signal Field is activated.

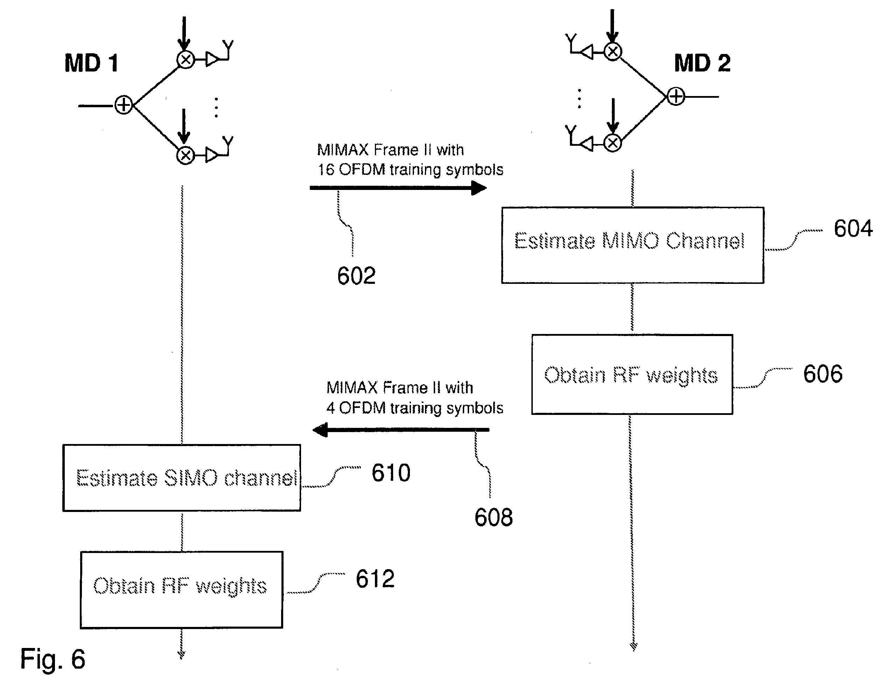

A MIMAX channel estimation block 320 performs a channel estimation for the MIMO-transmission communication, which will be explained in more detail further below with reference to Fig. 6. Units 322 and 324 are connected with the MIMAX channel-estimation unit 320 and serve for determining and correcting weight factors to be used for combining the incoming different concurrent analogue RF signals of the concurrent transmissions of a MIMO transmission. The weight correction is done in dependence on a frequency offset estimation provided by a corresponding block 326.

For the data link layer, the standard IEEE 802.2 LLC is used on top of the 802.11a MAC. In the following, the functionalities of the MAC unit 304, which differ from the standard-compatible functionalities and adapt the MAC layer to the MIMAX transmission system will be explained. The new functionalities of the MIMAX base band processor impose some changes on the MAC processor, e.g. knowledge of the configuration of the transceiver including the number of antennas for RX and TX or a database of active and available users (MAC addresses, number of antennas at the user, last optimum weights, etc.). These tasks and the storage are related to the MAC because no memory is available at the PLCP base band processor.

The MAC processor controls the data and control-signal flow to the base band processor depending on the communication scheme. Not only data transmission is initialised by the MAC processor transmitting data and the (last) optimum weights to the base band, but also transferring weights for channel estimation to the PLCP.

In the following, reference is made to Figs. 4 and 5 in parallel. Fig. 4 is a schematic representation of a frame structure that can be used in the context of MIMO transmissions. Fig. 5 shows a schematic representation of a section of the frame of Fig. 4 with bit assignments in the MIMAX Signal Field 402.

The frame 400 shown in Fig. 4 is a physical-layer frame. It is modified in comparison with a conventional IEEE802.11a frame for the purpose of allowing communication via a MIMO transmission. In particular, the modified structure allows for MIMO channel estimation in a backwards-compatible manner. To that end, a MIMAX Signal Field 402 is used for indicating the capability of handling MIMO transmissions. For a conventional IEEE802.11a frame, a reserved bit in the Signal Field 402 will be set to zero, whereas for a MIMAX frame, the reserved bit of the Signal Field 402 will be set to one.

Furthermore, specific OFDM training symbols, herein also referred to as MIMO or MIMAX training symbols, are contained in the frame 400, and indicated by the reference labels TW1, ..., TWn. The MIMAX training symbols TW1 to TWn are transmitted and then processed on the receiver side using different RF beamformer weights in the analogue RF domain. This process is performed separately and after a SISO channel estimation, for which long training symbols Ts and T2 are used. The long training symbols preceded by a guard interval G12 for separation from short training symbols t1, t2,.., t0, which serve for signal detection, automatic gain control (AGC), time and coarse frequency synchronization.

The frame advantageously includes additional information about the system parameters. In particular, the number of receive/transmit antennas and the number of training symbols are contained in the MIMAX Signal Field 402 (Fig. 5). In particular the number of receive antennas (N_RX, bits 9 and 10), and transmit antennas (N_TX, bits 6 and 7) is exchanged in this field. Also, the number N_T of training symbols is determined by the number of transmit and receive antennas bits 12 to 16, wherein the least significant bit (LSB) of the number is given first at bit position 12, and the most significant bit (MSB) is given last at bit position 16 of the MIMAX Signal Field 402. Bit 17 is a parity bit P. Bits H1-H4 at bit positions 0 to 3 are reserved for further use.

As a further difference over a conventional IEEE802.11a, a number of MIMAX stuffing symbols, shown by way of example by the MIMAX stuffing symbol "Stuff 1" is included between the MIMAX Signal Field and the MIMAX training symbols in the fame 400 (Fig. 4). The stuffing symbols serve to provide enough time to the analogue front end in order to change amplitudes and phases employed during the reception of each OFDM training symbol.

To allow backwards-compatibility, the remainder of the frame 400 is exactly the same as a conventional IEEE802.11a frame.

Fig. 6 shows schematic flow diagram of a channel estimation process in the communication between two IEEE802.11a transceivers capable of MIMO transmissions. The displayed channel estimation process for two MIMAX devices MD1 and MD2 is based on a time-division-duplex (TDD) operation mode. It assumes channel reciprocity, so that the channel observed between any pair of antennas is assumed to be the same regardless of the direction of the link.

The procedure comprises two phases. In a first phase, the first MIMAX device MD1 transmits a channel estimation frame. For the present description, it is assumed by way of example that both MIMAX devices have four antennas and transmit four MIMAX frames per antenna so that 16 OFDM training symbols are transmitted from the MIMAX device MD1 to the MIMAX device MD2.

In a step 602, on the basis of the received 16 OFDM training symbols, the second MIMAX device MD2 estimates the MIMO channel and obtains RF weights in steps 604 and 606. In a subsequent step 608, the second MIMAX device MD2 transmits a frame with only 4 OFDM training symbols, that is, by using only one of its 4 antennas, to the MIMAX device MD1. Accordingly, the MIMAX device MD1 only estimates the received SIMO channel, which is received via the four different receive antennas of the first MIMAX MD1. From this, the RF weights are obtained in a step 612. A distinguishing feature of the channel estimation procedure shown in Fig. 6 is that, due to the use of Tx-Rx beamforming at the second MIMAX device MD2, it is only required to estimate a SIMO channel at the first MIMAX device MD1 after the second MIMAX device MD2 has estimated the full MIMO channel.

The channel estimation block 320 at the receiving second MIMAX device MD2 estimates the MIMO OFDM channel from the received training symbols. To this end, the block implements a least-squares (LS) estimate. By default, the estimation algorithms use binary-phase-shift keying (BPSK) training symbols and orthogonal sets of beamformers.

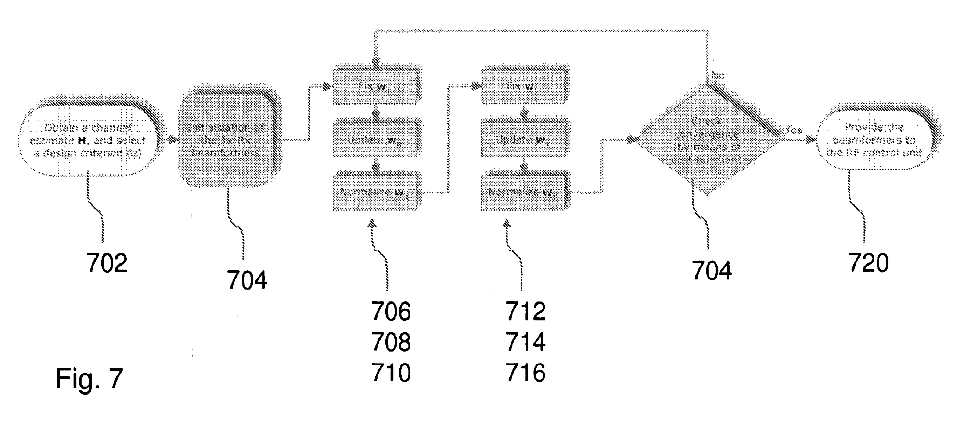

Fig. 7 is a simplified flow diagram of a channel estimation process performed at the receiving end. The procedure shown in Fig. 7 is performed by blocks 320 and 322 of the MIMAX device 300 of Fig. 3. The proposed MIMO transmission of the present invention, unlike conventional MIMO systems, applies a common pair of Tx-Rx beamformers to all the IEEE802.11a data carriers. This translates into the problem of selecting the optimal pair of beamformers for a specific channel realization. The beamformer selection block 322, which is responsible for determining the RF weights uses an efficient gradient search algorithm shown in Fig. 7. The algorithm is based on the minimization of the following cost function:

$$\frac{1}{\alpha-1}\log\left[\sum_{k=1}^{N_c}\frac{1}{N_c}\left(\frac{1}{1+\gamma\left|h_k\right|^2}\right)^{\alpha-1}\right].$$

The symbols used in the cost function have been defined in a previous section of this specification. The choice of the parameter $\alpha$ permits to select different performance criteria in the adjustment of the beamforming parameters at the receiver and the transmitter. Once a criterion has been selected, $\alpha$ is a fixed parameter. In particular, $\alpha = 0$ translates into an optimization of the overall signal-to-noise ratio (SNR). Equivalently, it reduces to the maximization of the energy of the equivalent SISO channel. $\alpha = 1$ provides the criterion consisting of the maximization of the system capacity. This can be proved by applying L'Hopital's rule to the general cost function. $\alpha = 2$ provides the criterion of minimizing the bit error rate under the assumption of linear receivers and optimal linear precoding. Other $\alpha$ values provide a tradeoff between the energy and the spectral flatness of the equivalent SISO channel. For larger $\alpha$, part of the channel energy is sacrificed in order to obtain more frequency-flat equivalent channels.

In the following, a short overview of the process is given. After channel estimation, selection of an optimization criterion and an initialization of the beamformes for the transmitter and the receiver, in steps 702 and 704, only the receive beamformer is modified in a first series of steps 706 to 710, while the transmit beamformer is kept fixed. In a second series of steps 712 to 716, the transmit beamformer is modified, considering fixed the receive beamformer.

More specifically, the process starts ascertaining a channel estimation matrix H and selecting the desired value of the parameter $\alpha$ at step 702. In step 704, the Tx-Rx beamformers are initialized.

Subsequently, in a sequence of steps 706 to 710, the transmitter weights are set as fixed (step 706), and

the receiver weights are updated (step 708) and subsequently normalized (step 710). Then, the receiver weights are set as fixed (step 712), the transmitter weights are updated (step 714) and normalized (step 714). Then, the convergence of the current beamformer determination is checked by checking for a minimization of the cost function with the current beamforming parameters at step 718.

If no convergence has been achieved, the procedure branches back to step 706 and follows the sequence of the steps 706 to 716 to check if the convergence is achieved with a next set of beamforming parameters. If convergence is indeed achieved, the procedure ends with step 720.

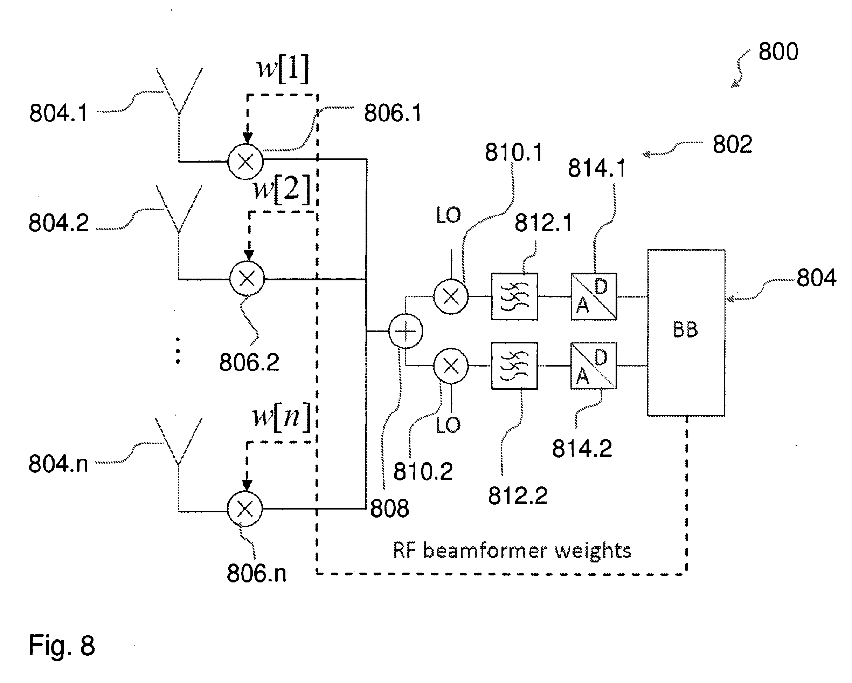

Fig. 8 is a simplified block diagram of a MIMAX receiver 800 that illustrates the combining in the analogue part 802 of the receiver.

The MIMAX receiver has a plurality of antennas 804.1 to 804.n for receiving incoming signals RF signals, each antenna forming a separate reception branch. Subsequent band-pass filters and low-noise amplifiers in each branch, as known in the art, are not shown her for reasons of graphical simplification. An analogue beamforming unit 806 comprises controllable vector modulators 806.1 to 806.n, which modify amplitude and phase of the respective antenna signals by multiplying the incoming RF signals with respective complex weight factors w[1] to w[n] received from a digital baseband unit 816. The weighted analogue signals are then fed to and combined by an adder 808. Thus, spatial processing of the received signals is immediately performed after reception and before demodulation. A demodulation unit 810 has two demodulators 810.1 and 810.2 for I and Q signal components of the combined signal. The demodulators are driven by a local oscillator LO. The demodulated I and Q signals are forwarded to respective low-pass filters 812.1 and 812.2 and subsequently converted to digital signals by Analogue-to-Digital converters 814.1 and 814.2, respectively. The digital signals are then fed to a digital baseband unit 816 for further processing. The digital baseband unit comprises an RF control unit (cf. Fig. 3), which determines the complex weight factors w[1] to w[n] and provides them to the vector modulators of the beamforming unit 806.

The signal flow described above for a receiver is inverted for a MIMAX transmitter, which is not shown here. From the foregoing description of the MIMAX receiver, a person of ordinary skill in the art immediately visualizes a corresponding MIMAX transmitter structure, in which digital baseband signals are converted to analogue I and Q components, up-converted to the RF domain, combined, and then fed to multiple parallel vector modulators, each connected with a respective transmit antenna of a respective transmit branch for enabling multiple spatially diverse transmissions of the single data stream.

The MIMAX transmission and reception concept described combines the available spatial diversity of smart antenna systems with the low system complexity of SISO systems. The spatial processing of a conventional MIMO approach is shifted to each receive path in the RF front-end. Albeit additional circuitry is needed for this spatial processing, parallel receive paths merge into a single analogue base band after the spatial signal processing. Furthermore, no spatial processing is required in the digital base band. This reduces system complexity and power consumption because the most power consuming subsystems are shared among the receive paths.

This fundamental concept of coherent processing is generally applicable to all air interfaces. It allows a parallel and independent processing on all traffic resources.

**Claims**

1.  A method for operating an IEEE802.11 receiver (800), comprising

    - detecting whether a multiple-input-multiple-output transmission, hereinafter MIMO transmission, is possible in RF communication with an IEEE802.11 transmitter,
    wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;
    - if yes:

        - operating the IEEE802.11 receiver (800) with a plurality of antennas (804.1...804.n) in communication with the IEEE802.11 transmitter;
        - performing a channel estimation process in communication with the IEEE802.11 transmitter,
        - determining a set of weights (w[1]...w[n]) to be applied to the analogue RF signals received in different ones of the concurrent transmissions of the MIMO transmission;
        - receiving the MIMO transmission via the plurality of antennas (804.1...804. n);
        - subsequently combining the plurality of analogue RF signals according to a combining algorithm using the determined set of weights (w[1]...w[n]), thus forming a combined analogue RF signal;
        - subsequently converting the combined analogue RF signal into a combined digital baseband signal;
        - subsequently further processing the combined digital baseband signal;

        - if no:

        - operating the IEEE802.11 receiver (800) with a single antenna (804.1...804.n) in communication with the IEEE802.11 transmitter;
        - receiving and processing the stream of analogue radio frequency, RF, signals, in the form of a single-input-single-output transmission according to the IEEE802.11 standard, hereinafter SISO transmission, via the single antenna (804.1...804.n).

2.  The method of claim 1, wherein determining the set of weights comprises

    - receiving a first frame from the IEEE 802.11 transmitter in a first MIMO transmission, which employs a first subset of weights for the IEEE 802.11 transmitter, and updating only a second subset of weights (w[1]...w[n]) for the IEEE 802.11 receiver (800);

- transmitting a second frame from the IEEE 802.11 receiver (800) to the IEEE 802.11 transmitter in a second MIMO transmission, using the updated second subset of weights (w[1]...w[n]); and

- repeating these foregoing steps until the first and second subsets of weights for the IEEE 802.11 transmitter and receiver (800) achieve a predetermined convergence criterion.

3. The method of one of the preceding claims, wherein receiving the first channel estimation frame comprises

- receiving a plurality of OFDM training symbols (TW1...TWn), different ones of the OFDM symbols being transmitted by employing different sets of weights (w[1]...w[n]);
- selecting an optimal set of weights (w[1]...w[n]) according to a predetermined selection criterion.

4. The method of claim 4, wherein selecting the optimal set of weights (w[1]...w[n]) comprises selecting that set of weights (w[1]...w[n]), for which the following cost function is minimized:

$$\frac{1}{\alpha-1}\log\left[\sum_{k=1}^{N_c}\frac{1}{N_c}\left(\frac{1}{1+\gamma|h_k|^2}\right)^{\alpha-1}\right],$$

wherein

- $h_k$ represents a response of a virtual equivalent SISO channel for the k-th active subcarrier,
- $N_c$ is the number of active subcarriers;
- $H_k$ is a matrix representing the MIMO channel estimation for the k-th subcarrier, wherein each element of the matrix $H_k$ represents the channel between one transmit and one receive antenna;
- $w_T$ and $w_R$ are transmit and receive beamformer vectors (beamformers), wherein each element in these vectors is a complex weight factor representing an amplitude and phase to be applied by the RF-control unit;
- y is a signal-to-noise ratio defined as the relation between a transmitted power and a noise power at the receiver; and
- $\alpha$ is a selectable fixed parameter which permits to select one of different performance criteria to be optimized by the selected set of weights (w[1]...w[n]).

5. The method of one of the preceding claims, wherein

- transforming the radio signals of the MIMO transmission into a plurality of analogue RF signals and combining the plurality of analogue RF signals is performed by operating a corresponding plurality of analogue receiver front ends of the receiver; and wherein
- transforming the combined analogue RF signal into a combined digital baseband signal and further processing the combined digital baseband signal is performed by operating a single digital baseband part of the receiver (800).

6. The method of one of the preceding claims, wherein detecting whether the MIMO transmission is possible in RF communication with the IEEE802.11 transmitter comprises detecting whether a bit at a predefined bit position of a predefined field of a frame received from the IEEE802.11 transmitter assumes a predefined value indicative of the capability for a MIMO transmission.

7. The method of one of the preceding claims, further comprising

- detecting from a received frame of the MIMO transmission how many concurrent transmissions are provided in the MIMO transmission;
- operating a corresponding number of antennas (804.1...804.n) and receiver front ends for receiving the MIMO transmission.

8. A method for operating an IEEE802.11 transmitter, comprising

- detecting whether a multiple-input-multiple-output transmission, hereinafter MIMO transmission, is possible in RF communication with a target IEEE802.11 receiver (800),
wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;
- if yes:

  - operating the IEEE802.11 transmitter with a plurality of antennas in communication with the target IEEE802.11 receiver (800);
  - performing a channel estimation process in communication with the target IEEE802.11 receiver (800) of the MIMO transmission;
  - determining a set of weights to be applied to the analogue RF signals to be transmitted in different ones of the concurrent transmissions of the MIMO transmission;
  - transmitting the MIMO transmission via the plurality of antennas to the target IEEE802.11 receiver (800);

- if no:

  - operating the IEEE802.11 transmitter with a single antenna in communication with the target IEEE802.11 receiver (800);
  - transmitting the stream of analog RF signals as a single-input-single-output transmission according to the IEEE802.11 standard, hereinafter SISO transmission, via at least one of the plurality of antennas.

9. The method of claim 8, wherein determining the set of weights comprises

  - transmitting a first frame from the IEEE802.11 transmitter to the target IEEE802.11 receiver (800) in a first MIMO transmission using a first subset of weights for the IEEE 802.11 transmitter;
  - receiving a second frame from the target IEEE802.11 receiver (800) in a second MIMO transmission and updating only the first subset of weights for the IEEE802.11 transmitter;
  - repeating these foregoing steps until the first and second subsets of weights for the IEEE802.11 transmitter and receiver achieve a predetermined convergence criterion.

10. The method of claim 9, wherein transmitting the first channel estimation frame comprises transmitting a plurality of OFDM training symbols, different ones of the OFDM symbols being transmitted by employing different sets of weights;

11. The method of claim 8 or 9, wherein detecting whether a MIMO transmission is possible in RF communication with the target IEEE802.11 receiver (800), comprises including a bit assuming a predefined value indicative of a capability of the transmitter for a MIMO transmission at a predefined bit position of a predefined field of a frame to be transmitted.

12. An IEEE802.11 receiver (800), comprising

  - a MIMO detecting unit, which is configured to detect whether a multiple-input-multiple-output transmission, hereinafter MIMO transmission, is possible in RF communication with an IEEE802.11 transmitter,
wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;
  - a channel estimation unit, which is connectable with a plurality of antennas (804.1...804.n) and which is configured to perform, if a MIMO transmission is possible with the IEEE802.11 transmitter, a channel estimation process in communication with the IEEE802.11 transmitter;
  - a beamforming unit, which is configured to determine a set of weights (w[1]...w[n]) to be applied to the analogue RF signals received in different ones of the concurrent transmissions of the MIMO transmission;
  - an RF frontend unit, which is connectable with the channel estimation unit, the beamforming unit and with a plurality of antennas (804.1...804.n) and which is configured to
  - receive the MIMO transmission via the plurality of antennas (804.1...804.n);
  - subsequently combine the plurality of analogue RF signals according to a combining algorithm using the determined set of weights (w[1]...w[n]), thus forming a combined analogue RF signal;
  - subsequently convert the combined analogue RF signal into a combined analogue digital baseband signal;
  - a baseband unit, which is connected with the RF frontend and which is configured to further process the combined digital baseband signal;

wherein the RF frontend unit and the baseband unit are further configured to, if a MIMO transmission is not possible with the IEEE802.11 transmitter, receive and process the stream of analogue radio frequency, RF, signals, in the form of a single-input-single-output transmission according to the IEEE802.11 standard, hereinafter SISO transmission, via at least one of the plurality of antennas (804.1...804.n).

13. An IEEE802.11 transmitter, comprising

- a MIMO detecting unit, which is configured to detect whether a multiple-input-multiple-output transmission, hereinafter MIMO transmission, is possible in RF communication with a target IEEE802.11 receiver (800), wherein the MIMO transmission takes the form of multiple concurrent transmissions of a single stream of analogue radio frequency, RF, signals, corresponding analogue RF signals of different concurrent transmissions of the stream differing only by having different amplitudes or different phases or different amplitudes and phases;
- a channel estimation unit, which is connectable with a plurality of antennas and which is configured to perform, if a MIMO transmission is possible with the target IEEE802.11 receiver (800), a channel estimation process in communication with the target IEEE802.11 receiver (800);
- a beamforming unit, which is configured to determine a set of weights to be applied to the analogue RF signals to be transmitted in different ones of the concurrent transmissions of the MIMO transmission;
- an RF frontend unit, which is connectable with the channel estimation unit and with a plurality of antennas and which is configured to, if a MIMO transmission is possible with the target IEEE802.11 receiver, transmit the MIMO transmission via the plurality of antennas and, if a MIMO transmission is not possible with the target IEEE802.11 receiver (800), transmit the stream of analogue RF signals as a single-input-single-output transmission according to the IEEE802.11 standard, hereinafter SISO transmission, via at least one of the plurality of antennas;

14. An IEEE802.11 transceiver, which comprises an IEEE802.11 receiver (800) according to claim 12 and an IEEE802.11 transmitter according to claim 13.

**Patentansprüche**

1. Verfahren zum Betreiben eines IEEE802.11-Empfängers (800), enthaltend:

- Detektieren, ob eine Mehrfacheingabe-Mehrfachausgabe-Übertragung, im Folgenden MIMO-Übertragung genannt, möglich ist in HF-Kommunikation mit einem IEEE802.11-Sender, wobei die MIMO-Übertragung die Form mehrerer gleichzeitiger Übertragungen eines einzelnen Stroms analoger Hochfrequenzsignale (HF-Signale) annimmt, die analogen HF-Signalen unterschiedlicher gleichzeitiger Übertragungen des Stroms entsprechen, die sich nur dadurch unterscheiden, dass sie unterschiedliche Amplituden oder unterschiedliche Phasen oder unterschiedliche Amplituden und Phasen aufweisen;
- falls ja:

  - Betreiben des IEEE802.11-Empfängers (800) mit einer Mehrzahl von Antennen (804.1...804.n) in Kommunikation mit dem IEEE802.11-Sender;
  - Durchführen eines Kanalschätzungsprozesses in Kommunikation mit dem IEEE802.11-Sender,
  - Bestimmen eines Satzes von Gewichtungen (w[1]...w[n]), die auf die analogen HF-Signale anzuwenden sind, die in den einzelnen unterschiedlichen gleichzeitigen Übertragungen der MIMO-Übertragung empfangen werden;
  - Empfangen der MIMO-Übertragung über die Mehrzahl von Antennen (804.1...804.n);
  - anschließendes Kombinieren der Mehrzahl von analogen HF-Signalen entsprechend eines Kombinationsalgorithmus, der den bestimmten Satz von Gewichtungen (w[1]...w[n]) verwendet, um somit ein kombiniertes analoges HF-Signal zu bilden;
  - anschließendes Konvertieren des kombinierten analogen HF-Signals zu einem kombinierten digitalen Basisbandsignal;
  - anschließendes weiteres Verarbeiten des kombinierten digitalen Basisbandsignals;

- falls nein:

  - Betreiben des IEEE802.11-Empfängers (800) mit einer einzelnen Antenne (804.1...804.n) in Kommunikation mit dem IEEE802.11-Sender;

- Empfangen und Verarbeiten des Stroms der analogen Hochfrequenzsignale (HF-Signale) in der Form einer Einzeleingabe-Einzelausgabe-Übertragung gemäß dem Standard IEEE802.11, im Folgenden SISO-Übertragung genannt, über die einzelne Antenne (804.1...804.n).

2. Verfahren nach Anspruch 1, wobei das Bestimmen des Satzes der Gewichtungen enthält:

- Empfangen eines ersten Frame von dem IEEE802.11-Sender in einer ersten MIMO-Übertragung, die eine erste Teilmenge an Gewichtungen für den IEEE802.11-Sender verwendet, und Aktualisieren nur einer zweiten Teilmenge von Gewichtungen (w[1]...w[n]) für den IEEE802.11-Empfänger (800);
- Senden eines zweiten Frame vom IEEE802.11-Empfänger (800) zum IEEE802.11-Sender in einer zweiten MIMO-Übertragung unter Verwendung der aktualisierten zweiten Teilmenge der Gewichtungen (w[1]...w[n]); und
- Wiederholen dieser vorangehenden Schritte, bis die ersten und zweiten Teilmengen an Gewichtungen für den IEEE802.11-Sender und
- Empfänger (800) ein vorgegebenes Konvergenzkriterium erfüllen.

3. Verfahren nach einem der vorangehenden Ansprüche, wobei das Empfangen des ersten Kanalschätzungs-Frame enthält:

- Empfangen einer Mehrzahl von OFDM-Trainingssymbolen (TW1...TWn), wobei einzelne unterschiedliche OFDM-Symbole unter Verwendung unterschiedlicher Sätze von Gewichtungen (w[1]...w[n]) gesendet werden;
- Auswählen eines optimalen Satzes von Gewichtungen (w[1]...w[n]) entsprechend einem vorgegebenen Auswahlkriterium.

4. Verfahren nach Anspruch 3, wobei das Auswählen des optimalen Satzes von Gewichtungen (w[1]...w[n]) das Auswählen jenes Satzes von Gewichtungen (w[1]...w[n]) enthält, für den die folgende Kostenfunktion minimiert ist:

$$\frac{1}{\alpha-1}\log\left[\sum_{k=1}^{N_c}\frac{1}{N_c}\left(\frac{1}{1+\gamma\left|h_k\right|^2}\right)^{\alpha-1}\right],$$

wobei

- $h_k$ eine Antwort eines virtuellen äquivalenten SISO-Kanals für den k-ten aktiven Unterträger ist.
- $N_c$ die Anzahl aktiver Unterträger ist;
- $H_k$ eine Matrix ist, die die MIMO-Kanalschätzung für den k-ten Unterträger repräsentiert, wobei jedes Element der Matrix $H_k$ den Kanal zwischen einer Sende- und einer Empfangsantenne repräsentiert;
- $w_T$ und $w_R$ Sende- und Empfangs-Strahlformervektoren (Strahlformer) sind, wobei jedes Element in diesen Vektoren ein komplexer Gewichtungsfaktor ist, der eine Amplitude und eine Phase repräsentiert, die von der HF-Steuereinheit anzuwenden sind;
- y ein Störabstand ist, der als Verhältnis zwischen einer gesendeten Leistung und einer Störleistung an dem Empfänger definiert ist; und
- $\alpha$ ein auswählbarer fester Parameter ist, der erlaubt, eines von verschiedenen Leistungskriterien auszuwählen, das durch den ausgewählten Satz von Gewichtungen (w[1]...w[n]) zu optimieren ist;

5. Verfahren nach einem der vorangegangen Ansprüche, wobei

- das Transformieren der Funksignale der MIMO-Übertragung in eine Mehrzahl analoger HF-Signale und das Kombinieren der Mehrzahl analoger HF-Signale durchgeführt werden, indem eine entsprechende Mehrzahl analoger Empfänger-Eingangsschaltungen des Empfängers betrieben werden; und wobei
- das Transformieren des kombinierten analogen HF-Signals zu einem kombinierten digitalen Basisbandsignal und das weitere Verarbeiten des kombinierten digitalen Basisbandsignals durchgeführt werden, indem ein einzelner digitaler Basisbandteil des Empfängers (800) betrieben wird.

6. Verfahren nach einem der vorangehenden Ansprüche, wobei das Detektieren, ob die MIMO-Übertragung in HF-Kommunikation mit dem IEEE802.11-Sender möglich ist, das Detektieren umfasst, ob ein Bit an einer vordefinierten Bitposition eines vordefinierten Feldes eines vom IEEE802.11-Sender empfangenen Frames einen vordefinierten Wert annimmt, der die Fähigkeit zu einer MIMO-Übertragung anzeigt.

7. Verfahren nach einem der vorangehenden Ansprüche, ferner enthaltend:

   - Detektieren aus einem empfangenen Frame der MIMO-Übertragung, wie viele gleichzeitige Übertragungen in der MIMO-Übertragung vorgesehen sind;
   - Betreiben einer entsprechenden Anzahl von Antennen (804.1...804.n) und Empfänger-Eingangsschaltungen zum Empfangen der MIMO-Übertragung.

8. Verfahren zum Betreiben eines IEEE802.11-Senders, enthaltend:

   - Detektieren, ob eine Mehrfacheingabe- Mehrfachausgabe- Übertragung, im Folgenden MIMO-Übertragung, in HF-Kommunikation mit einem Ziel-IEEE802.11-Empfänger (800) möglich ist,
   wobei die MIMO-Übertragung die Form mehrerer gleichzeitiger Übertragungen eines einzelnen Stroms analoger Hochfrequenzsignale (HF-Signale) annimmt, die analogen HF-Signalen unterschiedlicher gleichzeitiger Übertragungen des Stroms entsprechen, die sich nur dadurch unterscheiden, dass sie unterschiedliche Amplituden oder unterschiedliche Phasen oder unterschiedliche Amplituden und Phasen aufweisen;
   - falls ja:

      - Betreiben des IEEE802.11-Senders (800) mit einer Mehrzahl von Antennen (804.1...804.n) in Kommunikation mit dem Ziel-IEEE802.11-Sender (800);
      - Durchführen eines Kanalschätzungsprozesses in Kommunikation mit dem Ziel-IEEE802.11-Empfänger (800) der MIMO-Übertragung;
      - Bestimmen eines Satzes von Gewichtungen, die auf die analogen HF-Signale anzuwenden sind, die in einzelnen unterschiedlichen der gleichzeitigen Übertragungen der MIMO-Übertragung zu übertragen sind;
      - Senden der MIMO-Übertragung über die Mehrzahl von Antennen zu dem Ziel-IEEE802.11-Empfänger (800);

   - falls nein:

      - Betreiben des IEEE802.11-Senders mit einer einzelnen Antenne in Kommunikation mit dem Ziel-IEEE802.11-Empfänger (800);
      - Senden des Stroms analoger HF-Signale als eine Einzeleingabe-Einzelausgabe-Übertragung entsprechend dem Standard IEEE802.11, im Folgenden SISO-Übertragung genannt, über wenigstens eine der Mehrzahl von Antennen.

9. Verfahren nach Anspruch 8, wobei das Bestimmen des Satzes der Gewichtungen enthält:

   - Senden eines ersten Frames vom IEEE802.11-Sender zum Ziel-IEEE802.11-Empfänger (800) in einer ersten MIMO-Übertragung unter Verwendung einer ersten Teilmenge von Gewichtungen für den IEEE802.11-Sender;
   - Empfangen eines zweiten Frames vom Ziel-IEEE802.11-Empfänger (800) in einer zweiten MIMO-Übertragung und Aktualisieren nur der ersten Teilmenge der Gewichtungen für den IEEE802.11-Sender;
   - Wiederholen dieser vorangehenden Schritte, bis die ersten und zweiten Teilmengen an Gewichtungen für den IEEE802.11-Sender und
   - Empfänger ein vorgegebenes Konvergenzkriterium erfüllen.

10. Verfahren nach Anspruch 9, wobei das Senden des ersten Kanalschätzungs-Frames das Senden einer Mehrzahl von OFDM-Trainingssymbolen enthält, wobei einzelne unterschiedliche OFDM-Symbole unter Verwendung unterschiedlicher Sätze von Gewichtungen übertragen werden.

11. Verfahren nach Anspruch 8 oder 9, wobei das Detektieren, ob eine MIMO-Übertragung in HF-Kommunikation mit dem Ziel-IEEE802.11-Empfänger (800) möglich ist, das Einschließen eines Bits, das einen vordefinierten Wert annimmt, der eine Fähigkeit des Senders zu einer MIMO-Übertragung anzeigt, an einer vordefinierten Bitposition eines vordefinierten Feldes des zu sendenden Frames enthält.

12. IEEE802.11-Empfänger (800), enthaltend:

- eine MIMO-Detektionseinheit, die dafür konfiguriert ist, zu Detektieren, ob eine Mehrfacheingabe-Mehrfachausgabe-Übertragung, im Folgenden MIMO-Übertragung genannt, in HF-Kommunikation mit einem IEEE802.11-Sender möglich ist,

wobei die MIMO-Übertragung die Form mehrerer gleichzeitiger Übertragungen eines einzelnen Stroms von analogen Hochfrequenz-Signalen (HF-Signalen) annimmt, die analogen HF-Signalen verschiedener gleichzeitiger Übertragungen des Stroms entsprechen, die sich nur dadurch unterscheiden, dass sie unterschiedliche Amplituden oder unterschiedliche Phasen oder unterschiedliche Amplituden und Phasen aufweisen;

- eine Kanalschätzungseinheit, die mit einer Mehrzahl von Antennen (804.1...804.n) verbindbar ist und dafür konfiguriert ist, dann, wenn eine MIMO-Übertragung mit dem IEEE802.11-Sender möglich ist, einen Kanalschätzungsprozess in Kommunikation mit dem IEEE802.11-Sender durchzuführen;

- eine Strahlformungseinheit, die dafür konfiguriert ist, einen Satz von Gewichtungen (w[1]...w[n]) zu bestimmen, die auf die analogen HF-Signale anzuwenden sind, die in einzelnen verschiedenen gleichzeitigen Übertragungen der MIMO-Übertragung empfangen werden;

- eine HF-Eingangseinheit, die mit der Kanalschätzungseinheit, der Strahlformungseinheit und mit einer Mehrzahl von Antennen (804.1...804.n) verbindbar ist und dafür konfiguriert ist,

- die MIMO-Übertragung über die Mehrzahl von Antennen (804.1...804.n) zu Empfangen;
- anschließend die Mehrzahl von analogen HF-Signalen entsprechend eines Kombinationsalgorithmus unter Verwendung des bestimmten Satzes von Gewichtungen (w[1]...w[n]) zu kombinieren, um somit ein kombiniertes analoges HF-Signal zu bilden;
- anschließend das kombinierte analoge HF-Signal in ein kombiniertes analoges digitales Basisbandsignal umzusetzen;

- eine Basisbandeinheit, die mit der HF-Eingangsschaltung verbunden ist und dafür konfiguriert ist, das kombinierte digitale Basisbandsignal weiterzuverarbeiten;

wobei die HF-Eingangseinheit und die Basisbandeinheit ferner dafür konfiguriert sind, dann, wenn eine MIMO-Übertragung mit dem IEEE802.11-Sender nicht möglich ist, den Strom der analogen Hochfrequenz-Signale (HF-Signale) in der Form einer Einzeleingabe-Einzelausgabe-Übertragung gemäß dem Standard IEEE802.11, im Folgenden SISO-Übertragung genannt, über wenigstens eine der Mehrzahl von Antennen (804.1...804.n) zu empfangen und zu verarbeiten.

13. IEEE802.11-Sender enthaltend:

- eine MIMO-Detektionseinheit, die dafür konfiguriert ist, zu detektieren, ob eine Mehrfacheingabe-Mehrfachausgabe-Übertragung, im Folgenden MIMO-Übertragung genannt, in HF-Kommunikation mit einem IEEE802.11-Empfänger (800) möglich ist,

wobei die MIMO-Übertragung die Form mehrerer gleichzeitiger Übertragungen eines einzelnen Stroms von analogen Hochfrequenz-Signalen (HF-Signalen) annimmt, die analogen HF-Signalen verschiedener gleichzeitiger Übertragungen des Stroms entsprechen, die sich nur dadurch unterscheiden, dass sie unterschiedliche Amplituden oder unterschiedliche Phasen oder unterschiedliche Amplituden und Phasen aufweisen;

- eine Kanalschätzungseinheit, die mit einer Mehrzahl von Antennen verbindbar ist und dafür konfiguriert ist, dann, wenn eine MIMO-Übertragung mit dem Ziel-IEEE802.11-Empfänger (800) möglich ist, einen Kanalschätzungsprozess in Kommunikation mit dem Ziel-IEEE802.11-Empfänger (800) durchzuführen;

- eine Strahlformungseinheit, die dafür konfiguriert ist, einen Satz von Gewichtungen zu bestimmen, der auf die analogen HF-Signale anzuwenden ist, die in einzelnen unterschiedlichen gleichzeitigen Übertragungen der MIMO-Übertragung zu übertragen sind; und

- eine HF-Eingangseinheit, die mit der Kanalschätzungseinheit und mit einer Mehrzahl von Antennen verbindbar ist und die dafür konfiguriert ist, dann, wenn eine MIMO-Übertragung mit dem Ziel-IEEE802.11-Empfänger möglich ist, die MIMO-Übertragung über die Mehrzahl von Antennen zu übertragen, und dann, wenn eine MIMO-Übertragung mit dem Ziel-IEEE802.11-Empfänger (800) nicht möglich ist, den Strom der analogen HF-Signale als eine Einzeleingabe-Einzelausgabe-Übertragung gemäß dem IEEE802.11-Standard, im Folgenden SISO-Übertragung genannt, über wenigstens eine der Mehrzahl von Antennen zu übertragen.

14. IEEE802.11-Sendeempfänger, der einen IEEE802.11-Empfänger (800) nach Anspruch 12 und einen IEEE802.11-Sender nach Anspruch 13 enthält.

**Revendications**

1. Procédé d'exploitation d'un récepteur IEEE 802.11 (800), comprenant les étapes ci-dessous consistant à :

   - détecter si une transmission de type « entrée multiple, sortie multiple », ci-après transmission MIMO, est possible dans une communication RF avec un émetteur IEEE 802.11 ;
   dans lequel la transmission MIMO prend la forme de multiples transmissions simultanées d'un flux unique de signaux de radiofréquence, RF, analogiques, des signaux RF analogiques correspondants de différentes transmissions simultanées du flux ne différant qu'en ce qu'ils présentent différentes amplitudes ou différentes phases ou différentes amplitudes et phases ;
   - si oui :

      - exploiter le récepteur IEEE 802.11 (800) avec une pluralité d'antennes (804.1, ..., 804.n) en communication avec l'émetteur IEEE 802.11 ;
      - mettre en oeuvre un processus d'estimation de canal en communication avec l'émetteur IEEE 802.11 ;
      - déterminer un ensemble de pondérations (w[1], ..., w[n]) à appliquer aux signaux RF analogiques reçus dans différentes transmissions parmi les transmissions simultanées de la transmission MIMO ;
      - recevoir la transmission MIMO par le biais de la pluralité d'antennes (804.1, ..., 804.n) ;
      - combiner subséquemment la pluralité de signaux RF analogiques selon un algorithme de combinaison en utilisant l'ensemble de pondérations déterminé (w[1], ..., w[n]), ce qui permet de former par conséquent un signal RF analogique combiné ;
      - convertir subséquemment le signal RF analogique combiné en un signal de bande de base numérique combiné ;
      - traiter en outre subséquemment le signal de bande de base numérique combiné ;

   - sinon :

      - exploiter le récepteur IEEE 802.11 (800) avec une antenne unique (804.1, ..., 804.n) en communication avec l'émetteur IEEE 802.11 ;
      - recevoir et traiter le flux de signaux de radiofréquence, RF, analogiques, sous la forme d'une transmission de type « entrée unique, sortie unique » selon la norme IEEE 802.11, ci-après transmission SISO, par l'intermédiaire de l'antenne unique (804.1, ..., 804.n).

2. Procédé selon la revendication 1, dans lequel l'étape de détermination de l'ensemble de pondérations comprend les étapes ci-dessous consistant à :

   - recevoir une première trame en provenance de l'émetteur IEEE 802.11 dans une première transmission MIMO, qui emploie un premier sous-ensemble de pondérations pour l'émetteur IEEE 802.11, et mettre à jour uniquement un second sous-ensemble de pondérations (w[1], ..., w[n]) pour le récepteur IEEE 802.11 (800) ;
   - transmettre une seconde trame, du récepteur IEEE 802.11 (800) à l'émetteur IEEE 802.11, dans une seconde transmission MIMO, en utilisant le second sous-ensemble de pondérations mis à jour (w[1], ..., w[n]) ; et
   - répéter les étapes qui précèdent jusqu'à ce que les premier et second sous-ensembles de pondérations pour le récepteur et l'émetteur IEEE 802.11 (800) atteignent un critère de convergence prédéterminé.

3. Procédé selon l'une quelconque des revendications précédentes, dans lequel l'étape de réception de la première trame d'estimation de canal comprend les étapes ci-dessous consistant à :

   - recevoir une pluralité de symboles d'apprentissage de modulation OFDM (TW1, ..., TWn), certains symboles distincts parmi les symboles de modulation OFDM étant transmis en utilisant différents ensembles de pondérations (w[1], ..., w[n]) ;
   - sélectionner un ensemble de pondérations optimal (w[1], ..., w[n]) selon un critère de sélection prédéterminé.

4. Procédé selon la revendication 4, dans lequel l'étape de sélection de l'ensemble de pondérations optimal (w[1], ..., w[n]) comprend l'étape consistant à sélectionner cet ensemble de pondérations (w[1], ..., w[n]) pour lequel la fonction de coût suivante est minimisée :

$$\frac{1}{\alpha - 1} \log \left[ \sum_{k=1}^{N_c} \frac{1}{N_c} \left( \frac{1}{1 + \gamma |h_k|^2} \right)^{\alpha - 1} \right],$$

où

- $h_k = w_R^H H_k w_T$ représente une réponse d'un canal SISO équivalent virtuel pour la k-ième sous-porteuse active ;
- $N_c$ représente le nombre de sous-porteuses actives ;
- $H_k$ est une matrice représentant l'estimation de canal MIMO pour la k-ième sous-porteuse, dans lequel chaque élément de la matrice $H_k$ représente le canal entre une antenne de transmission et une antenne de réception ;
- $w_T$ et $w_R$ sont des vecteurs de conformation de faisceau d'émission et de réception (des conformateurs de faisceau), dans lequel chaque élément de ces vecteurs est un facteur de pondération complexe représentant une amplitude et une phase destinées à être appliquées par l'unité de commande RF ;
- y est un rapport signal sur bruit défini en tant que la relation entre une puissance émise et une puissance du bruit au niveau du récepteur ; et
- $\alpha$ est un paramètre fixe sélectionnable qui permet de sélectionner l'un parmi différents critères de performance devant être optimisés par l'ensemble de pondérations sélectionné (w[1], ..., w[n]).

5. Procédé selon l'une quelconque des revendications précédentes, dans lequel :

- l'étape consistant à transformer les signaux radio de la transmission MIMO en une pluralité de signaux RF analogiques et à combiner la pluralité de signaux RF analogiques, est mise en oeuvre en exploitant une pluralité correspondante de parties frontales de récepteur analogique du récepteur ; et dans lequel
- l'étape consistant à transformer le signal RF analogique combiné en un signal de bande de base numérique combiné, et à traiter en outre le signal de bande de base numérique combiné, est mise en oeuvre en exploitant une unique partie de bande de base numérique du récepteur (800).

6. Procédé selon l'une quelconque des revendications précédentes, dans lequel l'étape consistant à détecter si la transmission MIMO est possible dans la communication RF avec l'émetteur IEEE 802.11 consiste à détecter si un bit à une position de bit prédéfinie d'un champ prédéfini d'une trame reçue à partir de l'émetteur IEEE 802.11 prend une valeur prédéfinie indiquant la capacité pour une transmission MIMO.

7. Procédé selon l'une quelconque des revendications précédentes, comprenant en outre les étapes ci-dessous consistant à :

- détecter, à partir d'une trame reçue de la transmission MIMO, le nombre de transmissions simultanées qui sont fournies dans la transmission MIMO ;
- exploiter un nombre correspondant d'antennes (804.1, ..., 804.n) et de parties frontales de récepteur en vue de recevoir la transmission MIMO.

8. Procédé destiné à exploiter un émetteur IEEE 802.11, comprenant les étapes ci-dessous consistant à :

- détecter si une transmission de type « entrée multiple, sortie multiple », ci-après transmission MIMO, est possible dans une communication RF avec un récepteur IEEE 802.11 cible ;
dans lequel la transmission MIMO prend la forme de multiples transmissions simultanées d'un flux unique de signaux de radiofréquence, RF, analogiques, des signaux RF analogiques correspondants de différentes transmissions simultanées du flux ne différant qu'en ce qu'ils présentent différentes amplitudes ou différentes phases ou différentes amplitudes et phases ;
- si oui :

  - exploiter l'émetteur IEEE 802.11 avec une pluralité d'antennes en communication avec le récepteur IEEE 802.11 cible (800) ;
  - mettre en oeuvre un processus d'estimation de canal en communication avec le récepteur IEEE 802.11 cible (800) de la transmission MIMO ;

- déterminer un ensemble de pondérations à appliquer aux signaux RF analogiques à transmettre dans différentes transmissions parmi les transmissions simultanées de la transmission MIMO ;
- transmettre la transmission MIMO par le biais de la pluralité d'antennes au récepteur IEEE 802.11 cible (800) ;

- sinon :

- exploiter l'émetteur IEEE 802.11 avec une antenne unique en communication avec le récepteur IEEE 802.11 cible (800) ; et
- transmettre le flux de signaux RF analogiques, sous la forme d'une transmission de type «entrée unique, sortie unique» selon la norme IEEE 802.11, ci-après transmission SISO, par l'intermédiaire d'au moins l'une de la pluralité d'antennes.

9. Procédé selon la revendication 8, dans lequel l'étape consistant à déterminer l'ensemble de pondérations comprend les étapes ci-dessous consistant à :

- transmettre une première trame, de l'émetteur IEEE 802.11 au récepteur IEEE 802.11 cible (800), dans une première transmission MIMO, en utilisant un premier sous-ensemble de pondérations pour l'émetteur IEEE 802.11 ;
- recevoir une seconde trame en provenance du récepteur IEEE 802.11 cible (800) dans une seconde transmission MIMO et mettre à jour uniquement le premier sous-ensemble de pondérations pour l'émetteur IEEE 802.11 ;
- répéter les étapes qui précèdent jusqu'à ce que les premier et second sous-ensembles de pondérations pour le récepteur et l'émetteur IEEE 802.11 atteignent un critère de convergence prédéterminé.

10. Procédé selon la revendication 9, dans lequel l'étape de transmission de la première trame d'estimation de canal consiste à transmettre une pluralité de symboles d'apprentissage de modulation OFDM, différents symboles parmi les symboles de modulation OFDM étant transmis en utilisant différents ensembles de pondérations.

11. Procédé selon la revendication 8 ou 9, dans lequel l'étape consistant à détecter si une transmission MIMO est possible dans la communication RF avec le récepteur IEEE 802.11 cible (800), comprend l'étape consistant à inclure un bit prenant une valeur prédéfinie indicative d'une capacité de l'émetteur pour une transmission MIMO à une position de bit prédéfinie d'un champ prédéfini d'une trame à transmettre.

12. Récepteur IEEE 802.11 (800), comprenant :

- une unité de détection de processus MIMO, laquelle est configurée de manière à détecter si une transmission de type « entrée multiple, sortie multiple », ci-après transmission MIMO, est possible dans une communication RF avec un émetteur IEEE 802.11 ;
dans lequel la transmission MIMO prend la forme de multiples transmissions simultanées d'un flux unique de signaux de radiofréquence, RF, analogiques, des signaux RF analogiques correspondants de différentes transmissions simultanées du flux ne différant qu'en ce qu'ils présentent différentes amplitudes ou différentes phases ou différentes amplitudes et phases ;
- une unité d'estimation de canal, laquelle peut être connectée à une pluralité d'antennes (804.1, ..., 804.n) et est configurée de manière à mettre en oeuvre, si une transmission MIMO est possible avec l'émetteur IEEE 802.11, un processus d'estimation de canal en communication avec l'émetteur IEEE802.11 ;
- une unité de conformation de faisceaux, laquelle est configurée de manière à déterminer un ensemble de pondérations (w[1], ..., w[n]) à appliquer aux signaux RF analogiques reçus dans différentes transmissions parmi les transmissions simultanées de la transmission MIMO ;
- une unité frontale RF, laquelle peut être connectée à l'unité d'estimation de canal, à l'unité de conformation de faisceaux et à une pluralité d'antennes (804.1, ..., 804.n), et qui est configurée de manière à :

- recevoir la transmission MIMO par le biais de la pluralité d'antennes (804.1, ..., 804.n) ;
- combiner subséquemment la pluralité de signaux RF analogiques selon un algorithme de combinaison en utilisant l'ensemble de pondérations déterminé (w[1], ..., w[n]), ce qui permet de former par conséquent un signal RF analogique combiné ;
- convertir subséquemment le signal RF analogique combiné en un signal de bande de base numérique combiné ;

- une unité de bande de base, laquelle est connectée à la partie frontale RF et est configurée de manière à traiter en outre le signal de bande de base numérique combiné ;

dans lequel l'unité frontale RF et l'unité de bande de base sont en outre configurées de manière à, si une transmission MIMO n'est pas possible avec l'émetteur IEEE 802.11, recevoir et traiter le flux de signaux de radiofréquence, RF, analogiques, sous la forme d'une transmission de type « entrée unique, sortie unique » selon la norme IEEE 802.11, ci-après transmission SISO, par l'intermédiaire d'au moins l'une de la pluralité d'antennes (804.1, ..., 804.n).

13. Émetteur IEEE 802.11, comprenant :

- une unité de détection de processus MIMO, laquelle est configurée de manière à détecter si une transmission de type « entrée multiple, sortie multiple », ci-après transmission MIMO, est possible dans une communication RF avec un récepteur IEEE 802.11 cible (800) ;
dans lequel la transmission MIMO prend la forme de multiples transmissions simultanées d'un flux unique de signaux de radiofréquence, RF, analogiques, des signaux RF analogiques correspondants de différentes transmissions simultanées du flux ne différant qu'en ce qu'ils présentent différentes amplitudes ou différentes phases ou différentes amplitudes et phases ;
- une unité d'estimation de canal, laquelle peut être connectée à une pluralité d'antennes, et est configurée de manière à mettre en oeuvre, si une transmission MIMO est possible avec le récepteur IEEE 802.11 cible (800), un processus d'estimation de canal en communication avec le récepteur IEEE 802.11 cible (800) ;
- une unité de conformation de faisceaux, laquelle est configurée de manière à déterminer un ensemble de pondérations à appliquer aux signaux RF analogiques à transmettre dans différentes transmissions parmi les transmissions simultanées de la transmission MIMO ;
- une unité frontale RF, laquelle peut être connectée à l'unité d'estimation de canal et à une pluralité d'antennes, et qui est configurée de manière à, si une transmission MIMO est possible avec le récepteur IEEE 802.11 cible, transmettre la transmission MIMO par le biais de la pluralité d'antennes et, si une transmission MIMO n'est pas possible avec le récepteur IEEE 802.11 cible (800), transmettre le flux de signaux RF analogiques sous la forme d'une transmission de type « entrée unique, sortie unique » selon la norme IEEE 802.11, ci-après transmission SISO, par l'intermédiaire d'au moins une antenne de la pluralité d'antennes.

14. Émetteur-récepteur IEEE 802.11, lequel comprend un récepteur IEEE 802.11 (800) selon la revendication 12 et un émetteur IEEE 802.11 selon la revendication 13.

EP 2 234 355 B1

Fig. 1

Wireless channel

Fig. 2

Fig. 3

EP 2 234 355 B1

400
402
310

| 10x0.8=8µs | 2x0.8+2x3.2=8µs | 0.8+3.2=4µs | 0.8+3.2=4µs | 0.8+3.2=4µs | 0.8+3.2=4µs |

| t1|t2|t3|t4|t5|t6| t7|t8|t9|t0 | GI2 | T1 | T2 | GI | Signal | GI | Stuff 1 | ···· | GI | TW 1 | ···· | GI | TW n |

Short Training Symbols:
Signal detect, AGC, Time and
coarse Freq. Sync.

Long Training Symbols:
SISO Channel Estimation

MIMAX
Signal Field

MIMAX
Stuffing Symbols

MIMAX Training Simbols:
MIMAX Channel Estimation

## Fig. 4

| MIMAX_CONF | | | | "1" | R | N_TX | | R | N_RX | | R | N_T | | | | | P | SIGNAL TAIL | | | | | |
|---|---|---|---|---|---|---|---|---|---|---|---|---|---|---|---|---|---|---|---|---|---|---|---|
| H1 | H2 | H3 | H4 | | | | | | | | | LSB | | | | MSB | | "0" | "0" | "0" | "0" | "0" | "0" |
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |

## Fig. 5

EP 2 234 355 B1

**MD 1**

**MD 2**

MIMAX Frame II with
16 OFDM training symbols

602

Estimate MIMO Channel — 604

Obtain RF weights — 606

MIMAX Frame II with
4 OFDM training symbols

Estimate SIMO channel — 610

608

Obtain RF weights — 612

Fig. 6

EP 2 234 355 B1

Fig. 7

Fig. 8

EP 2 234 355 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1838011 A